# DEMANDE DE BREVET EUROPEEN

(11) **EP 1 115 239 A1**
(43) Date de publication de la demande: **11.07.2001**
(21) Numéro de dépôt: 00403625.7
(22) Date de dépôt: 21.12.2000
(51) Int. Cl.: H04L 29/06

(54) **Procédé pour sécuriser une communication entre deux éléments logiciels, au travers d'un canal de communication non sécurisé**

(30) Priorité: 30.12.1999 FR 9916720
(71) Demandeur: ALCATEL, 75008 Paris (FR)
(72) Inventeur: Marquet, Bertrand, 92160 Antony (FR); Martin, Jean-Stéphane, 91540 Mennecy (FR); Fouquet, Guy, 91620 Nozay (FR)
(74) Mandataire: Lamoureux, Bernard

(57) **Abrégé**

Procédé pour sécuriser une communication entre un premier élément logiciel et un second élément logiciel, à travers un canal de communication non sécurisé, en collaboration avec au moins un serveur de sécurité, caractérisé en ce que les données véhiculées par ladite communication sont transmises par l'appel d'au moins une méthode d'au moins un objet de sécurité fourni par ledit au moins un serveur de sécurité.

## Description

La présente invention concerne un procédé de sécurisation d'une communication entre deux éléments logiciels.
Ces deux éléments logiciels peuvent être implantés au sein d'un même système de traitement de l'information, ou bien sur deux systèmes de traitement de l'information différent. Dans ce dernier cas, la communication est supportée par un réseau. Ce réseau peut être un réseau informatique qui peut être soit local (LAN pour *Local Area Network*, en anglais), soit de grande taille (WAN pour *Wide Area Network*), et notamment internet. Le réseau peut aussi être un réseau de télécommunication, et par exemple un réseau de radiocommunication.
On comprend donc que l'invention est indépendante de la nature du réseau supportant le canal de communication.

Dans l'état de la technique, il est connu de sécuriser une communication entre deux éléments, notamment logiciels, à travers un canal de communication On peut citer à titre d'exemple les protocoles basés sur la négociation préalables de clés de chiffrement et/ou de jeton d'authentification comme par exemple le protocole de Needham et Schroeder, et son implémentation dans des serveurs de type « Kerberos » ou « Sesame ». Ce protocole est par exemple décrit dans le RFC (Request for Comments) 1004, de l'IETF (*Internet Engineering Task Force*) intitulé « *A Distributed-Protocol Authentification Scheme* ».
Ces protocoles de l'état de la technique mettent en oeuvre un certain nombre d'échanges entre les applications pour négocier ces clés et/ou jetons.

De ce fait, ces solutions sont insuffisantes car elles possèdent une faiblesse majeure dans leur phase d'initialisation. En effet, ces protocoles nécessitent des échanges de message avant que la communication sécurisée soit mise en place. Ces échanges préalables sont donc une faiblesse majeure de cet état de l'art.
Le but de la présente invention est donc de pallier cette faiblesse, en proposant un procédé de sécurisation d'une communication entre deux éléments logiciels au travers d'un canal de communication non sécurisé, qui soit exempt de faiblesses lors de la phase d'initiation.
Pour cela, le procédé selon l'invention prévoit que les données véhiculées par cette communication sont transmises par l'appel d'une ou plusieurs méthodes d'objets (généralement un) fournis par un ou plusieurs serveurs de sécurité.
Les termes « méthodes » et « objets » doivent être compris au sens de la programmation orientée objets, et selon leur définition habituelle dans ce domaine. Ainsi, on appelle classe d'objets, une structure comportant à la fois, des attributs, c'est-à-dire des données, et des méthodes, c'est-à-dire des fonctions permettant de les manipuler. Généralement, les attributs de sont pas accessibles par les autres objets : ceux-ci ne peuvent y accéder que par un ensemble de méthodes qui forment, en quelque sorte, l'interface de cet objet avec l'extérieur.

L'invention a aussi pour objet un élément logiciel permettant de mettre en oeuvre un tel procédé.

Plus précisément, un tel élément logiciel comporte :
- d'une part, un module de communication permettant de transmettre des données par le canal de communication, de façon sécurisée, et,
- d'autre part, des moyens pour recevoir un nouveau module de communication de la part dudit serveur de sécurité.

Le procédé selon l'invention résout donc le problème du manque de sécurité des solutions de l'état de la technique, puisqu'il n'est plus nécessaire d'effectuer des négociations de clés ou de jetons comme dans les solutions précédemment décrites.
De plus, puisque le mécanisme (ou algorithme) de sécurisation est pris en charge par un objet de sécurité qui n'est pas connu de l'élément logiciel, celui-ci n'a pas besoin non plus d'être dévoilé au développeur de l'élément logiciel.
Pratiquement, seule une interface de programmation (c'est à dire, une ou plusieurs méthodes de cet objet, avec ses ou leurs paramètres) doit être connue, tandis que l'implémentation n'est pas connue. Ainsi, les algorithmes de sécurisation eux-mêmes peuvent n'être connus que du système lui-même (c'est-à-dire le serveur de sécurité), ce qui rend bien plus difficile l'attaque du système de sécurité.
On peut comprendre en effet que, d'une façon générale, moins on possède d'information sur le mécanisme de sécurisation que l'on cherche à attaquer, plus cette attaque est a priori difficile.

Un autre avantage est la flexibilité du procédé selon l'invention. En effet, du fait que les mécanismes de sécurisation sont mis en oeuvre dans des objets de sécurité, développés et gérés indépendamment des éléments logiciels, ceux-ci peuvent être modifiés facilement, sans remettre en question les éléments logiciels eux-mêmes.
Par conséquent, un changement de politique de sécurisation peut être effectué par un administrateur du système, de façon transparente pour les éléments logiciels.
Ce changement peut même être effectué de façon dynamique, au besoin. Autrement dit, l'arrêt du système n'est pas nécessaire pour modifier le mécanisme de sécurisation mis en oeuvre. Cette modification consiste à changer les objets de sécurité, et la répercussion de cette modification sur la sécurisation des communications se fait, tout naturellement, lorsque les nouveaux objets de sécurité sont transmis aux éléments logiciels les nécessitant.

Cette possibilité peut être utilisée afin d'améliorer encore plus le degré de sécurité du système en changeant, sur une base temporelle, les objets de sécurité qui peuvent être transmis depuis le serveur de sécurité, et, ce faisant, les mécanismes de sécurité sous-jacents. Ce changement peut être effectué périodiquement, ou bien de façon aléatoire, ce qui accroît encore le niveau de sécurisation.

L'invention et ses avantages sont présentés dans la description qui va suivre en relation avec les figures annexées.
La figure 1 représente un exemple de mise en oeuvre du système selon l'invention.
La figure 2 représente un autre exemple de mise en oeuvre de l'invention, dans lequel il y a deux serveurs de sécurité.

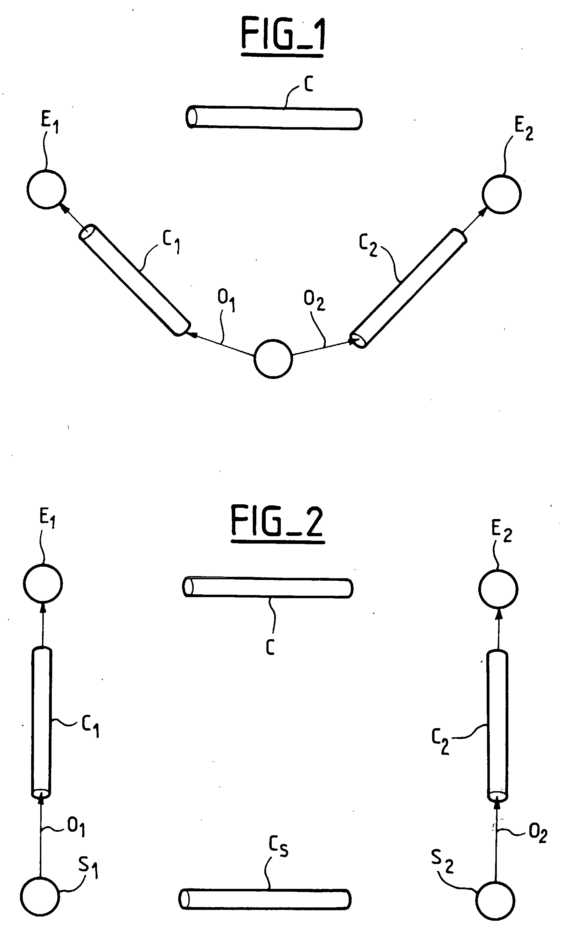

Sur la figure 1, on a représenté deux éléments logiciels E₁ et E₂ et un serveur de sécurité S. Afin de pouvoir communiquer, les éléments logiciels E₁ et E₂ utilisent un canal de communication C qui n'est pas sécurisé, c'est-à-dire que des éléments logiciels tiers peuvent lire les données véhiculées sur ce canal de communication.

Dans un premier temps, les éléments logiciels s'adressent au (ou aux) serveur(s) de sécurité S, qui leur transmet en réponse des objets de sécurité O₁ et O₂.
Selon un premier mode de réalisation, le serveur de sécurité S est centralisé et unique pour tout le système.

Selon un autre mode de réalisation, illustré par la figure 2, il existe plusieurs serveurs de sécurité, S₁, S₂ répartis sur le système. Ainsi, un premier serveur S₁ peut transmettre le ou les objet(s) de sécurité O₁ à l'élément logiciel E₁ tandis qu'un second serveur S₂ transmet le ou les objet(s) de sécurité O₂ à l'élément logiciel E₂.
Dans un tel mode de réalisation, il est nécessaire que les différents serveurs de sécurité soient à même de communiquer ensemble via un canal de communication Cₛ, afin d'avoir une politique de sécurité commune (ou, tout du moins, certains éléments communs d'une politique de sécurité qui peut être différente). Plus précisément, il est nécessaire que les objets de sécurité O₁ et O₂ qu'ils transmettent, soient cohérents : l'élément logiciel E₂ doit pouvoir relire les données émises par l'élément logiciel E₁.
Le canal de communication Cₛ, utilisé pour les communications entre les deux serveurs de sécurité, doit être sécurisé, afin d'éviter les attaques à ce niveau.

Quelque soit le nombre de serveurs de sécurité, les objets de sécurité sont transmis au travers des canaux de communication C₁ et C₂ qui sont des canaux de communication sécurisés, c'est-à-dire dont des éléments logiciels tiers ne peuvent comprendre la sémantique des données qu'ils véhiculent.
De tels canaux de communication sécurisés peuvent être établis conformément aux solutions de l'état de l'art précédemment exposées. Par exemple, les données (ici, le code des objets de sécurité) peuvent être cryptées par une clé de cryptage négociée entre le serveur de sécurité et chacun des éléments logiciel, et connue que d'eux seuls.
De plus, il est de première importance que les canaux de communication C₁ et C₂ soient sécurisés au moins en authentification et intégrités. Autrement dit, il faut que les éléments logiciels E₁ et E₂ soient sûrs de la provenance des objets de sécurité O₁ et O₂, c'est-à-dire qu'ils proviennent bien du serveur de sécurité S (c'est la notion d'authentification), et qu'ils n'ont pas été modifiés au cours du leur trajet dans les canaux de communication (c'est la notion d'intégrité).
En effet, il faut prévoir le cas de faux serveurs de sécurité envoyant des objets de sécurité ayant des buts malveillants, ou bien de modifications malveillantes (ou éventuellement, accidentelles) de ces objets de sécurité.

Par exemple, la sécurisation des canaux C₁ et C₂ peut être réalisée avec le protocole TLS (pour *Transport Layer Security*, en anglais), qui est décrit dans le RFC (*Request For Comments*) numéro 2246, issu de l'IETF (*Internet Engineering Task Force).* Ce protocole permet aux applications de type client/serveur de communiquer en assurant les services d'authentification et d'intégrité requis pour ces canaux. Pour offrir ces services, TLS utilise des algorithmes comme le triple-DES ou IDEA et des certificats conformes à la recommandation X.509 de l'ITU-T (*International Telecommunication Union, Telecommunication part*).

Ces canaux de communication, ainsi que les serveurs de communication peuvent être établis lors de l'initialisation du système, c'est-à-dire avant que des intrus malveillant aient pu être introduits dans ce système. Ils ne possèdent donc pas les faiblesses exposées précédemment et que la solution de l'invention se propose de pallier.

Ces objets de sécurité O₁ et O₂ peuvent être identiques pour chacun des deux éléments de sécurité E₁ et E₂ ou bien différents, et notamment spécifique au rôle que joue les éléments de sécurité.
Par exemple, on peut avoir une classe d'objets pour être transmise aux éléments logiciels ayant un rôle d'initiateur de la communication (E₁), une classe d'objets pour être transmise aux éléments logiciels ayant un rôle d'accepteur (E₂) et éventuellement une classe d'objets pour être transmise aux éléments logiciels ayant un double rôle.

Les différents rôles que peut ainsi avoir un élément logiciel vis à vis d'une ou plusieurs communication sont, par exemple, décrits dans le document RFC (*Request For Comment*) 2078 de l'IETF (*Internet Engineering Task Force*), intitulé « *Generic Security Service - Application Programming Interface*).

Le langage Java utilise une technique de migration qui permet de transmettre un objet. Cette technique est nommée « sérialisation » et consiste à encoder un ou plusieurs objets en un flux binaire, transmis au travers d'un canal de communication. A la réception, on peut reconstruire le ou les objets à partir de ce flux binaire.
Ce mécanisme est aisément utilisable dans le cadre de la présente invention, dans le but de transmettre les objets de sécurité depuis le (ou les) serveur de sécurité vers les éléments logiciels.

Après avoir reçu l'objet de sécurité O₁, l'élément logiciel E₁ peut appeler une méthode contenue dans cet objet de sécurité afin d'émettre des données, de façon sécurisée, sur le canal de communication C, à destination de l'élément logiciel E₂.
Préférentiellement, l'interface de cette méthode cache complètement les mécanismes de sécurité sous-jacents. Par exemple, cette méthode peut être de la forme :
Send_data(msg)
Autrement dit, cela signifie que le développeur de l'élément logiciel n'a besoin de connaître que les données qu'il désire envoyer (paramètre « msg »), puis à effectuer un appel à cette méthode (ici appelée « Send_data »).

L'implémentation de cette méthode (contenue dans l'objet de sécurité O₁) a la charge de mettre en oeuvre un (ou plusieurs) des mécanismes de sécurité disponible dans l'état de la technique (ou bien un nouveau), afin d'envoyer les données « msg ». Par exemple, elle peut mettre en oeuvre des communications avec un serveur d'authentification, crypter les données, etc.

De la même façon, l'élément logiciel E₂ reçoit de la part du serveur de sécurité S, un (ou éventuellement plusieurs) objet(s) de sécurité O₂.

Selon une première mise en oeuvre de l'invention, la classe de cet objet de sécurité O₂ est différente de celle de l'objet de sécurité O₁. Cette dernière ne comporte qu'une (ou des) méthodes pour émettre des données, tandis que la classe de l'objet de sécurité O₂ comporte les méthodes pour recevoir les données.
Selon une seconde mise en oeuvre de l'invention, les classes des objets de sécurité O₁ et O₂ sont identiques et comportent, à la fois, des méthodes pour émettre et pour recevoir des données.
Là encore, deux possibilités existent :
Selon une première possibilité, la classe des objets de sécurité O₁ et O₂ comportent au moins deux méthodes différentes, l'une pour émettre des données (la méthode « send-data », évoquée précédemment), l'autre pour recevoir ces données (par exemple nommée « receive_data »).
Selon la deuxième possibilité, la classe des objets de sécurité ne comporte qu'une seule méthode permettant à la fois d'émettre et recevoir des données. Cette possibilité rend le développement des applications logiciels E₁ et E₂ plus facile, puisqu'une seule interface de méthode est à connaître pour le développeur.
   Cette interface est par exemple de la forme :
   Transmission (msg)
   dans laquelle, le paramètre « msg » représente les données à émettre ou à recevoir.

Selon un premier mode de réalisation, l'interface de la méthode « Transmission » comporte un deuxième paramètre qui indique s'il s'agit d'émettre ou de recevoir.
Selon un second mode de réalisation, cette indication est effectuée de façon implicite, par la classe à laquelle le paramètre « msg » appartient. Typiquement, on peut utiliser deux classes, l'une s'il s'agit d'émettre les données représentées par « msg » et l'autre dans le cas où il faut recevoir des données et les stocker selon le paramètre « msg » (qui peut être un pointeur vers une zone mémoire, par exemple).

Par ailleurs, préférentiellement, la ou les méthodes (« transmission », « send_data », « receive_data ») sont terminales, c'est-à-dire qu'elles ne peuvent pas être redéfinies en faisant hériter une nouvelle classe de la classe de l'objet de sécurité transmis. Il s'agirait là, en effet, d'une faille dans le procédé de sécurisation.
De plus, rendre une méthode terminale a comme autre résultat de rendre le code objet généré par le compilateur plus concis. Or, dans la mesure où ce code objet est amené à être transmis sur un canal de communication, il s'agit là d'un avantage important et à prendre en compte.

Selon une mise en oeuvre de l'invention, le ou les objets de sécurité sont transmis à l'initialisation de la communication, puis sont détruit à la terminaison de cette communication.

Cette mise en oeuvre augmente le degré de sécurité de l'invention. En effet, en détruisant les objets de sécurité à la terminaison de la communication, et en les transmettant depuis le serveur de sécurité à l'initialisation d'une nouvelle communication, on réduit le temps de présence des objets de sécurité dans la mémoire du système de traitement dans lequel l'élément logiciel ayant nécessité l'objet de sécurité, est mis en oeuvre.

Par conséquent, on réduit le temps durant lequel un intrus malveillant peut tenter d'accéder au code de cet objet de sécurité en lisant le contenu de cette mémoire. Or comme nous l'avons évoqué précédemment, connaître le code de l'objet de sécurité, et donc le mécanisme qu'il met en oeuvre, affaibli le degré de sécurité du mécanisme. En effet, celui-ci peut alors se réduire à la recherche d'une clé de cryptage, par exemple, qui quoique étant une tâche particulièrement ardue lorsque la clé de cryptage est convenablement choisie, n'en reste pas moins plus aisée que la recherche du mécanisme de sécurité en lui-même.

## Revendications

1. Procédé pour sécuriser une communication entre un premier élément logiciel et un second élément logiciel, à travers un canal de communication non sécurisé, en collaboration avec au moins un serveur de sécurité, caractérisé en ce que les données véhiculées par ledit canal de communication sont transmises par l'appel d'au moins une méthode d'au moins un objet de sécurité fourni par ledit au moins un serveur de sécurité.

2. Procédé selon la revendication précédente, dans lequel ledit au moins un objet de sécurité est transmis par ledit au moins un serveur de sécurité, au travers d'un canal sécurisé.

3. Procédé selon une des revendications précédentes, dans lequel ledit au moins un objet de sécurité est transmis à l'initialisation de ladite communication, et détruit à la terminaison de ladite communication.

4. Procédé selon l'une des revendications précédentes, dans lequel ledit au moins un objet de sécurité possède une méthode permettant d'émettre et de recevoir des données au travers de ledit canal de communication non sécurisé.

5. Elément logiciel pouvant établir une communication sécurisée avec un autre élément logiciel, à travers un canal de communication non sécurisé, en collaboration avec au moins un serveur de sécurité, caractérisé en ce qu'il comporte :
• un module de communication permettant de transmettre des données par ladite communication, de façon sécurisée,
• des moyens pour recevoir un nouveau module de communication de la part dudit serveur de sécurité.
